# EUROPÄISCHE PATENTSCHRIFT

(11) **EP 1 044 834 B1**
(45) Veröffentlichungstag und Bekanntmachung des Hinweises auf die Patenterteilung: **18.06.2008**
(21) Anmeldenummer: 00107716.3
(22) Anmeldetag: 11.04.2000
(51) Int. Cl.: B60H 1/00

(54) **Verfahren zum Regeln der Innenraum-Temperatur eines Kraftfahrzeuges mit einer Heizungs-/Klimaanlage**
Method for controlling the internal temperature of a motor car with an heating and air conditioning installation
Procédé pour régler la temperature intérieure d'un véhicule à moteur avec un dispositif de chauffage et de climatisation

(30) Priorität: 13.04.1999 DE 19916559
(43) Veröffentlichungstag der Anmeldung: 18.10.2000
(73) Patentinhaber: GKR Gesellschaft für Fahrzeugklimaregelung mbH, 71229 Leonberg (DE)
(72) Erfinder: Harnisch-Scheuermann, Jürgen, 71272 Renningen (DE)
(74) Vertreter: Behrens, Ralf Holger

(56) Entgegenhaltungen:
- EP-A- 0 770 509
- EP-A- 0 872 368
- DE-A- 4 425 697
- GB-A- 2 282 242
- US-A- 4 930 698
- US-A- 5 400 963
- US-A- 5 833 133

## Beschreibung

### Stand der Technik

Die Erfindung betrifft ein Verfahren zum Regeln der Innenraum-Temperatur eines Kraftfahrzeuges mit einer Heizungs/-Klimaanlage, die in Abhängigkeit einer vorgebbaren Solltemperatur die dem Innenraum über die Heizungs-/Klimaanlage zugeführte Blasluft-Temperatur festlegt.

Bei den konventionellen Kraftfahrzeug-Innenraumheizungen/Klimaanlagen wird die für eine behagliche Innenraum-Temperatur notwendige Heiz-/Kühlleistung über im Pulsmodulationsverfahren angesteuerte Taktventile eingestellt. Wird eine höhere Leistung angefordert, dann erhöht sich die Einschaltdauer des Taktventils, was einen erhöhten Motorkühlmitteldurchsatz im Heizungswärmetauscher zur Folge hat. Die resultierende Erwärmung der den Heizungswärmetauscher durchströmenden Luft wird durch einen Blasluftfühler gemessen und durch einen Regelkreis im Heizungs-/Klimagerät gegebenenfalls korrigiert. Dieser Blasldftregelkreis, der im Normalfall dem Regelkreis für die lnnenraumtemperatur unterlagert ist, hat hauptsächlich die Aufgabe, die vom übergeordneten Regelkreis für den Innenraum-Temperaturregelkreis angeforderte Blasluft-Temperatur - und somit die Heiz-/Kühlleistung - den unterschiedlichen Betriebsbedingungen der Hei zungs-/Klimaanlage anzupassen. Ein derartiges Verfahren ist aus der US-A-4930698 benannt.

Es ist Aufgabe der Erfindung, ein Verfahren der eingangs erwähnten Art so zu vereinfachen, dass auf einen Blasluftfühler verzichtet werden kann.

Diese Aufgabe wird nach der Erfindung durch die im Anspruch 1 oder im Anspruch 2 beanspruchten Maßnahmen in gleicher Weise gelöst.

In jedem Fall wird allein durch die vom Blasluft-Stellgrößenrechner oder Blasluft-Rechner erfassten Betriebsbedingungen oder in dessen Kennlinien oder arithmetischen Funktionen vorgegebenen Daten in Verbindung lediglich mit der gemessenen Innenraum-Temperatur die Blasluft-Temperatur über die Heizungs-/Kühlanlage geregelt oder gesteuert, um die gewünschte Innenraum-Temperatur zu erhalten. Dabei braucht kein Blasluftfühler eingesetzt zu werden, so dass dafür kein Aufwand vorzusehen ist und die Regelung oder Steuerung allein mit Software erreicht werden kann.

Die wichtigsten Betriebsbedingungen, die auf die Blasluft-Temperatur Einfluss haben, stehen in modernen Kraftfahrzeugen bereits auf einem Bussystem zur Verfügung und werden nunmehr wie für andere Steuergeräte auch der Heizungs-/Klimaanlage, d.h. dem Blasluft-Stellgrößenrechner oder Blasluft-Rechner, angeboten. Der Blasluft-Stellgrößenrechner oder Blasluft-Rechner ist daher in der Lage, die sich aus den Betriebsbedingungen der Heizungs-/Klimaanlage theoretisch ergebende Blasluft-Temperatur so genau zu berechnen, wie dies für eine hinreichend genau funktionierende Innenraumtemperaturregelung oder - steuerung erforderlich ist.

Als Betriebsbedingungen stehen zur Verfügung:
Kühlmitteltemperatur, Kühlmitteldurchsatz, Schaltverhalten des Taktventils, Luftansaugtemperatur, Luftmenge und Schaltzustand von Zusatzheizumgen und dgl.

Kühlmitteltemperatur und Kühlmitteldurchsatz resultieren aus der Motorelektronik oder dem Kühlkreislauf-Steuergerät z.B. aus der Motordrehzahl, der Verteilung des Kühlmittels, der Einschaltdauer des Taktventils, der Zusatzwasserpumpe der Heizungs-/Klimaanlage und der Luftfeuchte.

Die Luftansaugtemperatur resultiert aus der Außentemperatur, der Verdampfertemperatur, der Stellung der Luftverteilerklappe und der Luftmenge, die wiederum aus der Gebläsespannung, der Fahrgeschwindigkeit und der Stellung der Luftverteilerklappe inklusive der Frischluft/Umluftweiche ableitbar ist.

Die Art und Weise, wie diese Betriebsbedingungen der Heizungs-/Klimaanlage die Blasluft-Temperatur beeinflussen, läßt sich sowohl analythisch beschreiben als auch empirisch ermitteln. Dabei kann es - je nach Auslegung des Motorkühlkreislaufes und der Heizungs-/Klimaanlage - durchaus sein, nur ein Teil der genannten Betriebsbedingungen eine relevante Rolle für die einzustellende Blasluft-Temperatur hat.

Diese Betrachtungen gelten auch für Heizungs-/Klimasteuergeräte mit mehr als einem Heizungs-Wärmetauscherkreis, wie z.B. bei Trennung der Heiz-/Kühlkreise in rechts/links, vorne/hinten oder unten/oben.

Bei dem erfindungsgemäßen Verfahren wird unterschieden in:
a) eine Innenraumtemperaturregelung mit unterlagertem Biastuft-Temperaturregelkreis, bei der die sich ergebende Blasluft-Temperatur nicht gemessen, sondern nur über die Betriebsbedingungen der Heizungs-/Klimaanlage errechnet wird,
b) eine Innenraumtemperaturregelung mit unterlagerter Blasluft-Temperatursteuerung, bei der die Heizungsstellgröße die Pulsweitenmodulation (oder vergleichbare Ansteuerungsverfahren wie z.B. Pulsfrequenzmodulation oder die Ansteuerung stetiger Wasserventile) über Kennfelder bzw. arithmetische Funktionen in Abhängigkeit der Betriebsbedingungen der Heizungs-/Klimaanalge steuert.

Die Erfindung wird anhand von in der Zeichnung als Blockschaltbilder dargestellte Ausführungsbeispielen näher erläutert. Es zeigen:
Fig. 1 ein Ausführungsbeispiel mit einem Blasluft-Rechner und einem Blaslufttemperatur-Regler und
Fig. 2 ein Ausführungsbeispiel mit einem Blasluft-Stellgrößenrechner.

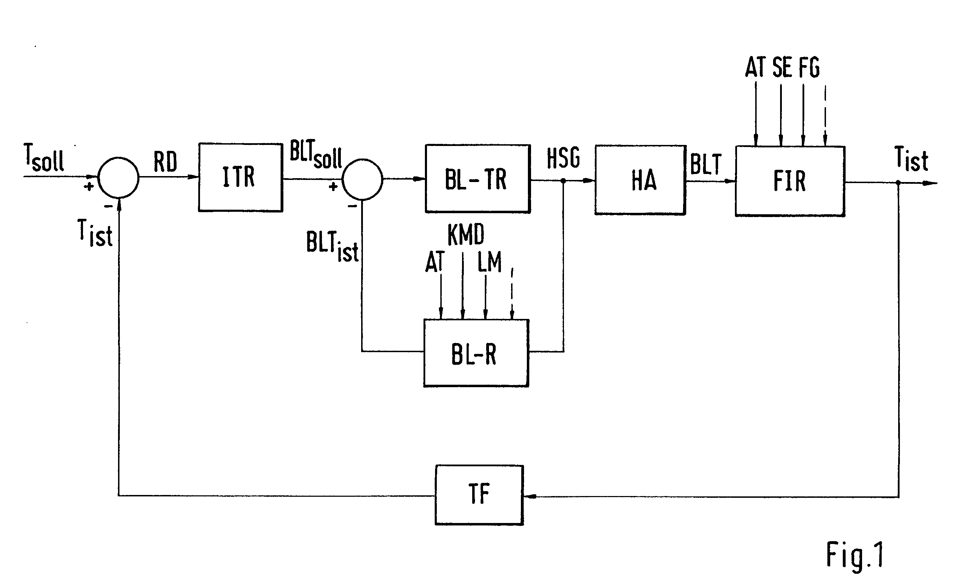

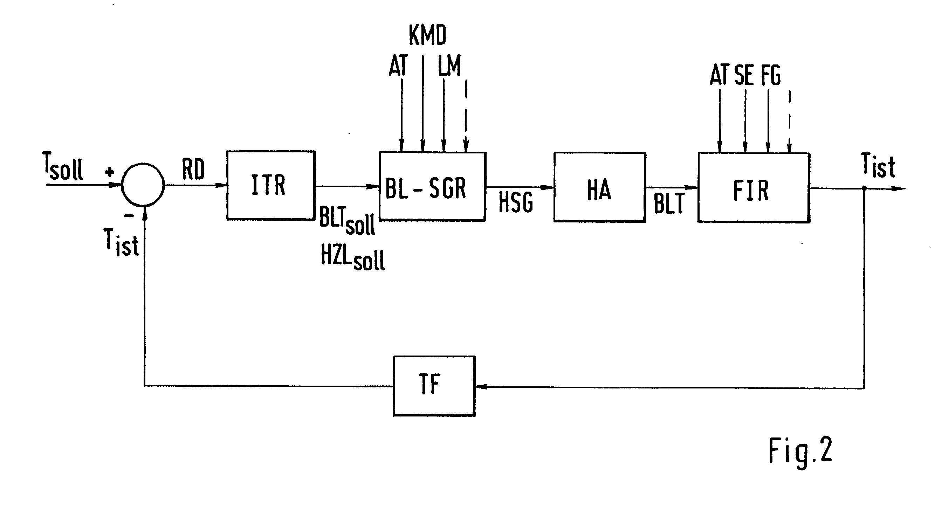

Bei den Ausführungsbeispielen nach Fig. 1 und 2 wird, wie bekannt, die Innenraum-Temperatur Tᵢₛₜ erfaßt und zwar über einen Temperaturfühler TF, wobei der erfaßte Temperaturwert mit einem vorgegebenen bzw. vorgebbaren Sollwert Tₛₒₗₗ verglichen wird. Dabei erhält man eine Regeldifferenz RD, die einem Innenraum-Temperaturregler ITR zugeführt wird.

Bei dem Ausführungsbeispiel nach Fig. 1 leitet der Innenraum-Temperaturregler ITR daraus einen Blasluft-Temperatursollwert BLTₛₒₗₗ ab, der einem Blasluft-Temperaturregler BL-TR zugeführt wird. Dieser Blasluft-Temperaturregler BL-TR gibt eine Stellgröße HSG an die Heizungs-/Klimaanlage HA ab, die eine entsprechende Blaslufttemperatur BLT im Innenraum FIR des Kraftfahrzeuges zur Folge hat. Die am Ausgang des Blasluft-Temperaturreglers BL-TR vorliegende Stellgröße HSG wird einem Blasluft-Rechner BLR zugeführt, der unter Berücksichtigung zumindest eines Teils von vorliegenden Betriebsbedingungen und/oder Kennlinienfeldern, wie mit den Steuereingängen für Außentemperatur AT, Kühlmitteldurchsatz KMD und Luftmenge LM angedeutet ist, einen Blasluft-Istwert BLTᵢₛₜ errechnet und zum Vergleich mit dem Blasluft-Sollwert BLTₛₒₗₗ des Innenraum-Temperaturreglers ITR zuführt. Der Vergleichswert wird vom Blasluft-Temperaturregler BL-TR zur Ableitung einer neuen Stellgröße HSG verwendet. Die neue Stellgröße HSG führt über die Heizungs-/Klimaanlage HA zu der dem Sollwert Tₛₒₗₗ entsprechenden Isttemperatur Tᵢₛₜ im Innenraum FIR des Kraftfahrzeuges. Der Innenraum FIR des Kraftfahrzeuges ist ebenfalls sich ändernden Betriebsbedingungen ausgesetzt, wie mit den Eingängen für Außentemperatur AT, Sonneneinstrahlung SE und Fahrgeschwindigkeit FG angedeutet ist, die zu einer Änderung der Innenraum-Temperatur führen und eine Neuberechnung der Blasluft-temperatur BLTᵢₛₜ im Blasluft-Rechner BL-R und eine Neuregelung der Stellgröße HSG durch den Blasluft-Temperaturregler BL-TR zur Folge hat.

Das Verfahren nach Fig. 1 erfordert keinen Blasluftfühler und wird allein durch Messung der Innenraum-Temperatur und Regelung der Stellgröße der Heizungs-/Klimaanlage HA realisiert, erfordert dabei nur Software im Blasluft-Rechner BL-R.

Bei dem Ausführungsbeispiel nach Fig. 2 führt der Innenraum-Temperaturregler ITR einen Blasluft-Sollwert BLTₛₒₗₗ oder einen Heiz-/Kühlleistungs-Sollwert HZLₛₒₗₗ an einen Blasluft-Stellgrößenrechner BL-SGR, der ebenfalls Betriebsbedingungen und/oder Kennlinienfelder berücksichtigt, wie die Steuereingänge für Außentemperatur AT, Kühlmitteldurchsatz KMD, Luftmenge LM andeuten. Der Blasluft-Stellgrößenrechner BL-SGR kann allein aufgrund des vorliegenden Blasluft-Sollwertes BTLₛₒₗₗ oder Heiz-/Kühlleistungs-Sollwertes HZLₛₒₗₗ und der Betriebsbedingungen und/oder Kennlinienfelder eine Stellgröße HSG für die Heizungs-/Klimaanlage HA erreichen, die eine der Solltemperatur Tₛₒₗₗ entsprechende Isttemperatur Tᵢₛₜ zur Folge hat. Der Blasluft-Stellgrößenrechner BL-SGR steuert in Abhängigkeit der Regeldifferenz RD des Innenraum-Temperaturreglers ITR die Stellgröße HSG der Heizungs-/Klimaanlage HA unter Berücksichtigung von Betriebsbedingungen und/oder vorgegebenen Kennlinienfeldern. Ein Blasluftfühler ist auch bei diesem Verfahren nach Fig. 2 nicht erforderlich.

Der Vorteil des erfindungsgemäßen Verfahrens liegt darin, kein Blasluftfühler mit seiner Verkabelung erforderlich ist und dass für die Heizungs-/Klimaanlage keine Analogeingänge benötigt werden. Die Funktion kann allein durch Software erreicht werden. Außerdem wird die Innenraum-Temperatur mit geringer Reaktionszeit geregelt oder gesteuert. Zudem wird ein Platz- und Gewichtsvorteil mit entsprechender Kostenreduzierung erreicht, der den für das neue Verfahren erforderlichen, erhöhten Applikationsaufwand und Programmspeicherplatzbedarf im Heizungs-/Klimasteuergerät mehr als aufwiegt.

## Patentansprüche

1. Verfahren zum Regeln der Innenraum-Temperatur eines Kraftfahrzeugs mit einer Heizungs-/Klimaanlage, die unter Verzicht auf einen Blasluftfühler in Abhängigkeit einer vorgebbaren Solltemperatur, die dem Innenraum über die Heizungs-/Klimaanlage zugeführte Blasluft-Temperatur festlegt, wobei in Abhängigkeit von der Regeldifferenz (RD) aus der vorgegebenen Solltemperatur (Tₛₒₗₗ) und der vorliegenden Isttemperatur (Tᵢₛₜ) mittels eines Innenraum-Temperaturreglers (ITR) ein zugeordneter Blaslufttemperatur-Sollwert (BLTₛₒₗₗ) abgeleitet wird, wobei mittels eines Blaslufttemperatur-Reglers (BL-TR) aus dem Blaslufttemperatur-Sollwert (BLTₛₒₗₗ) und einem errechneten Blaslufttemperatur-Istwert (BLTᵢₛₜ) eine Stellgröße (HSG) für die Heizungs-/Klimaanlage (HA) festgelegt wird, so dass sich die gewünschte Innenraum-Temperatur einstellt, und wobei ein Blasluft-Rechner (BL-R) aus der vorliegenden Stellgröße (HSG) unter Berücksichtigung vorliegender Betriebsbedingungen den Blaslufttemperatur-Istwert (BLTᵢₛₜ) für den Blasluftregler (BL-TR) errechnet, **dadurch gekennzeichnet, dass** als Betriebsbedingungen dem Blasluft-Rechner (BL-R) die Kühlmitteltemperatur und/oder der Kühlmitteldurchsatz (KMD) der Motorelektronik zugeführt werden.

2. Verfahren zum Regeln der Innenraum-Temperatur eines Kraftfahrzeugs mit einer Heizungs-/Klimaanlage, die unter Verzicht auf einen Blasluftfühler in Abhängigkeit einer vorgebbaren Solltemperatur, die dem Innenraum über die Heizungs-/Klimaanlage zugeführte Blasluft-Temperatur festlegt, wobei in Abhängigkeit von der Regeldifferenz (RD) aus der vorgegebenen Solltemperatur (Tₛₒₗₗ) und der vorliegenden Isttemperatur (Tᵢₛₜ) mittels eines Innenraum-Temperaturreglers (ITR) ein zugeordneter Blaslufttemperatur-Sollwert (BLTₛₒₗₗ) oder ein zugeordneter Heiz-Kühlleistungs-Sollwert (HZLₛₒₗₗ) abgeleitet wird und wobei mittels eines Blasluft-Stellgrößenrechners (BL-SGR) unter Berücksichtigung vorliegender Betriebsbedingungen eine Stellgröße (HSG) für die Heizungs-/Klimaanlage (HA) errechnet wird, so dass sich die gewünschte Innenraum-Temperatur einstellt, **dadurch gekennzeichnet, dass** als Betriebsbedingungen dem Blasluft-Stellgrößenrechner (BL-SGR) die Kühlmitteltemperatur und/oder der Kühlmitteldurchsatz (KMD) der Motorelektronik zugeführt werden.

3. Verfahren nach Anspruch 1 oder 2,
**dadurch gekennzeichnet,**
**dass** in einem Kraftfahrzeug mit einem die unterschiedlichen Betriebsbedingungen anzeigenden Bussystem die für die Blasluft-Temperatur relevanten Werte von diesem Bussystem abgegriffen werden.

## Claims

1. Method for controlling the interior space temperature of a motor vehicle having a heating/air-conditioning system which, while dispensing with a blown-air sensor, determines the blown-air temperature which is supplied to the interior space by means of the heating/air-conditioning system as a function of a predefinable nominal temperature, with an associated blown-air temperature nominal value (BLTₙₒₘ) being derived, as a function of the error signal (RD), from the predefined nominal temperature (Tₙₒₘ) and the present actual temperature (T_{act}) by means of an interior space temperature controller (ITR), with an actuating variable (HSG) for the heating/air-conditioning system (HA) being determined from the blown-air temperature nominal value (BLTₙₒₘ) and a calculated blown-air temperature actual value (BLT_{act}) by means of a blown-air temperature controller (BL-TR) such that the desired interior space temperature is generated, and with a blown-air calculator (BL-R) calculating the blown-air temperature actual value (BLT_{act}) for the blown-air controller (BL-TR) from the present actuating variable (HSG) taking into consideration present operating conditions, **characterized in that** the coolant temperature and/or the coolant throughput (KMD) of the engine electronics are supplied as operating conditions to the blown-air calculator (BL-R).

2. Method for controlling the interior space temperature of a motor vehicle having a heating/air-conditioning system which, while dispensing with a blown-air sensor, determines the blown-air temperature which is supplied to the interior space by means of the heating/air-conditioning system as a function of a predefinable nominal temperature, with an associated blown-air temperature nominal value (BLTₙₒₘ) or an associated heating/cooling power nominal value (HZLₙₒₘ) being derived, as a function of the error signal (RD), from the predefined nominal temperature (Tₙₒₘ) and the present actual temperature (T_{act}) by means of an interior space temperature controller (ITR), and with an actuating variable (HSG) for the heating/air-conditioning system (HA) being calculated taking into consideration present operating conditions by means of a blown-air actuating variable calculator (BL-SGR) such that the desired interior space temperature is generated, **characterized in that** the coolant temperature and/or the coolant throughput (KMD) of the engine electronics are supplied as operating conditions to the blown-air actuating variable calculator (BL-SGR).

3. Method according to Claim 1 or 2,
**characterized**
**in that**, in a motor vehicle having a bus system which displays the different operating conditions, the values relevant to the blown-air temperature are picked off from said bus system.

## Revendications

1. Procédé de régulation de la température de l'habitacle d'un véhicule automobile équipé d'une installation de chauffage/climatisation, qui sans utiliser de capteurs d'air soufflé, fixe la température de l'air soufflé par l'installation de chauffage/climatisation en fonction d'une température de consigne prédéfinie dans le volume intérieur,
et en fonction de la différence de régulation (RD) à partir de la température de consigne prédéfinie (Tₛₒₗₗ) et de la température réelle et actuelle (Tᵢₛₜ), à l'aide d'un régulateur de température d'habitacle (ITR), on déduit une valeur de consigne associée (BLTₛₒₗₗ) de la température de l'air soufflé,
à l'aide d'un régulateur de température d'air soufflé (BL-TR), à partir de la valeur de consigne de la température d'air soufflé (BLTₛₒₗₗ) et d'une valeur réelle calculée de la température de l'air soufflé (BLTᵢₛₜ), on fixe une grandeur de réglage (HSG) pour l'installation de chauffage/climatisation (HA) de façon à régler la température souhaitée dans l'habitacle, et
un calculateur d'air soufflé (BL-R), utilisant la présente R), utilisant la présente grandeur de réglage (HSG) et en tenant compte des conditions de fonctionnement existantes, calcule la valeur réelle de la température d'air soufflé (BLTᵢₛₜ) pour le régulateur d'air soufflé (BL-TR),
**caractérisé en ce que**
comme conditions de fonctionnement, on fournit au calculateur d'air soufflé (BL-R), la température de l'agent de refroidissement et/ou le débit d'agent de refroidissement (KMD) à l'électronique du moteur.

2. Procédé de régulation de la température de l'habitacle d'un véhicule automobile équipé d'une installation de chauffage/climatisation qui, sans utiliser de capteur d'air soufflé, en fonction d'une température de consigne prédéfinie, fixe la température de l'air soufflé fourni à l'habitacle par l'installation de chauffage/climatisation, en fonction de la différence de régulation (RD) entre la température de consigne prédéfinie (Tₛₒₗₗ) et la température réelle actuelle (Tᵢₛₜ), à l'aide d'un régulateur de température de l'habitacle (ITR) on déduit une valeur de consigne (BLTₛₒₗₗ) associée pour la température de l'air soufflé ou une valeur de consigne (HZLₛₒₗₗ) de la puissance de chauffage/refroidissement, associée et à l'aide d'un calculateur de grandeur de réglage d'air soufflé (BL-SGR) et en tenant compte des conditions de fonctionnement actuelles on calcule une grandeur de réglage (HSG) pour l'installation de chauffage/climatisation (HA) pour arriver à la température souhaitée de l'habitacle,
**caractérisé en ce que**
comme conditions de fonctionnement, l'électronique du moteur fournit au calculateur comme grandeurs de réglage de l'air soufflé (BL-SGR), la température de l'agent de refroidissement et/ou le débit d'agent de refroidissement (KMD).

3. Procédé selon la revendication 1 ou 2,
**caractérisé en ce que**
dans un véhicule comportant un système de bus indiquant des conditions de fonctionnement différentes, on prélève les valeurs caractéristiques de la température de l'air soufflé, dans ce système de bus.
